# EUROPEAN PATENT APPLICATION

(11) **EP 1 804 507 A2**
(43) Date of publication of application: **04.07.2007**
(21) Application number: 06025965.2
(22) Date of filing: 14.12.2006
(51) Int. Cl.: H04N 7/01

(54) **Video image processing apparatus, video image display apparatus, and video image processing method**

(30) Priority: 27.12.2005 JP 2005375164
(71) Applicant: KABUSHIKI KAISHA TOSHIBA, Tokyo 105-8001 (JP)
(72) Inventor: Hirayama, Keiko c/oI.P.D., Toshiba Corporation, Tokyo 105-8001 (JP); Ogawa, Yoshihiko c/oI.P.D., Toshiba Corporation, Tokyo 105-8001 (JP)
(74) Representative: HOFFMANN EITLE

(57) **Abstract**

According to one embodiment, there is provided a video image processing apparatus, including frame generator section (11) which continuously generates at a predetermined frequency (cf. 60 Hz) a plurality of frame images (BF1,BF2,...) on which one screen is represented by a plurality of horizontal lines based on a given video image signal, an interpolation frame generator section (12) which carries out an interpolation process with respect to a part of the plurality of horizontal lines of the adjacent two frame images from among the plurality of frame images generated by the frame generator section, thereby generating partial interpolation frame images (CF1_1,CF2_1,...) which interpolate the adjacent two frame images, and a control section (14) which controls such partial interpolation frame images to be inserted respectively sequentially in time series into the adjacent frame images and to be outputted.

## Description

One embodiment of the present invention relates to a video image processing apparatus for displaying a video image signal as a video image, a video image processing apparatus, a video image display apparatus, and a video image processing method being adopted to generate an interpolation frame image.

Recently, a flat display technique has been remarkably progressed, and many types of flat displays have been developed and produced. With respect to the latest flat displays, there has been a demand for high precision represented by high vision. As a measure for responding to this demand, a technique of interpolation frame processing is known. In this manner, nominal high quality imaging can be achieved by generating and inserting an interpolation frame image.

Patent document 1 (Jpn. Pat. Appln. KOKAI Publication No. 2005-6275) discloses a technique of achieving high quality imaging by using an interpolation frame technique for a display of a cellular phone or the like.

However, in a conventional technique of patent document 1, a transfer quantity of a subsequent stage increases due to use of an interpolation frame. Thus, a burden on data transfer increases, and there may occur a failure such as screen flickering, i.e., a phenomenon that a screen is momentarily frozen. In order to solve such a failure, there is a problem that interpolation frame processing must be cancelled or transfer specification must be drastically changed.

It is an object of the present invention to provide a video image processing apparatus, a video image display apparatus, and a video image processing method that are capable of achieving high quality imaging by carrying out interpolation frame processing while restricting a transfer burden.

According to one embodiment of the present invention, there is provided a video image processing apparatus, comprising: a frame generator section (11) which continuously generates at a predetermined frequency (cf. 60 Hz) a plurality of frame images (BF1, BF2, ...) on which one screen is represented by a plurality of horizontal lines based on a given video image signal; an interpolation frame generator section (12, 13, 16) which carries out an interpolation process with respect to a part of the plurality of horizontal lines of the adjacent two frame images from among the plurality of frame images generated by the frame generator section, thereby generating partial interpolation frame images (CF1_1, CF2_1, ...) which interpolate the adjacent two frame images; and a control section (14) which receives the plurality of frame images from the frame generator section and the partial interpolation frame images from the interpolation frame generator section, and then, controls such partial interpolation frame images to be inserted respectively sequentially in time series into the adjacent frame images and to be outputted.

In this manner, high quality imaging of image display can be achieved by carrying out frame correction in a possible range without exceeding the transfer capability of the video image processing apparatus.

The invention can be more fully understood from the following detailed description when taken in conjunction with the accompanying drawings, in which:
FIG. 1 is a block diagram depicting an example of a configuration of a video image processing apparatus according to an embodiment of the present invention;
FIG. 2 is a block diagram depicting another example of a configuration of a video image processing apparatus according to an embodiment of the present invention;
FIG. 3 is an illustrative view showing an example of a video image signal with an interpolation signal before carrying out a decimating process of a video image processing apparatus according to an embodiment of the present invention;
FIG. 4 is an illustrative view showing an example of a decimating process of an interpolation signal of a video image processing apparatus according to an embodiment of the present invention (a basic example);
FIG. 5 is an illustrative view showing an example of a decimating process of an interpolation signal of a video image processing apparatus according to an embodiment of the present invention (an example of alternately changing decimating positions);
FIG. 6 is an illustrative view showing an example of a decimating process of an interpolation signal of a video image processing apparatus according to an embodiment of the present invention (an example of two-stage interpolation);
FIG. 7 is an illustrative view showing an example of a decimating process of an interpolation signal of a video image processing apparatus according to an embodiment of the present invention (an example of three-stage interpolation);
FIG. 8 is an illustrative view showing an example of a decimating process of an interpolation signal of a video image processing apparatus according to an embodiment of the present invention (an example of three-stage interpolation in which no decimation is carried out at a second stage);
FIG. 9 is an illustrative view showing an example of a decimating process of an interpolation signal of a video image processing apparatus according to an embodiment of the present invention (an example of three-stage interpolation in which no decimation is carried out at a second stage and decimating positions are alternately changed);
FIG. 10 is an illustrative view showing an example of a video image produced by a process for decimating an interpolation signal of a video image processing apparatus according to an embodiment of the present invention;
FIG. 11 is an illustrative view showing an example of a video image produced by a process for decimating an interpolation signal of a video image processing apparatus according to an embodiment of the present invention;
FIG. 12 is a block diagram depicting an example of a configuration of a broadcast recording apparatus to which a video image processing apparatus according to an embodiment of the present invention has been applied;
FIG. 13 is a block diagram depicting an example of a configuration of a broadcast recording system to which a video image processing apparatus according to an embodiment of the present invention has been applied; and
FIG. 14 is a block diagram depicting an example of a configuration of a broadcast recording system to which a video image processing apparatus according to an embodiment of the present invention has been applied.

Various embodiments according to the invention will be described hereinafter with reference to the accompanying drawings. In general, according to one embodiment of the invention, there is provided a video image processing apparatus, including: a frame generator section (11) which continuously generates at a predetermined frequency (cf. 60 Hz) a plurality of frame images (BF1, BF2, ...) on which one screen is represented by a plurality of horizontal lines based on a given video image signal; an interpolation frame generator section (12, 13, 16) which carries out an interpolation process with respect to a part of the plurality of horizontal lines of the adjacent two frame images from among the plurality of frame images generated by the frame generator section, thereby generating partial interpolation frame images (CF1_1, CF2_1, ...) which interpolate the adjacent two frame images; and a control section (14) which receives the plurality of frame images from the frame generator section and the partial interpolation frame images from the interpolation frame generator section, and then, controls such partial interpolation frame images to be inserted respectively sequentially in time series into the adjacent frame images and to be outputted.

Hereinafter, an embodiment of the present invention will be described in detail with reference to the accompanying drawings.

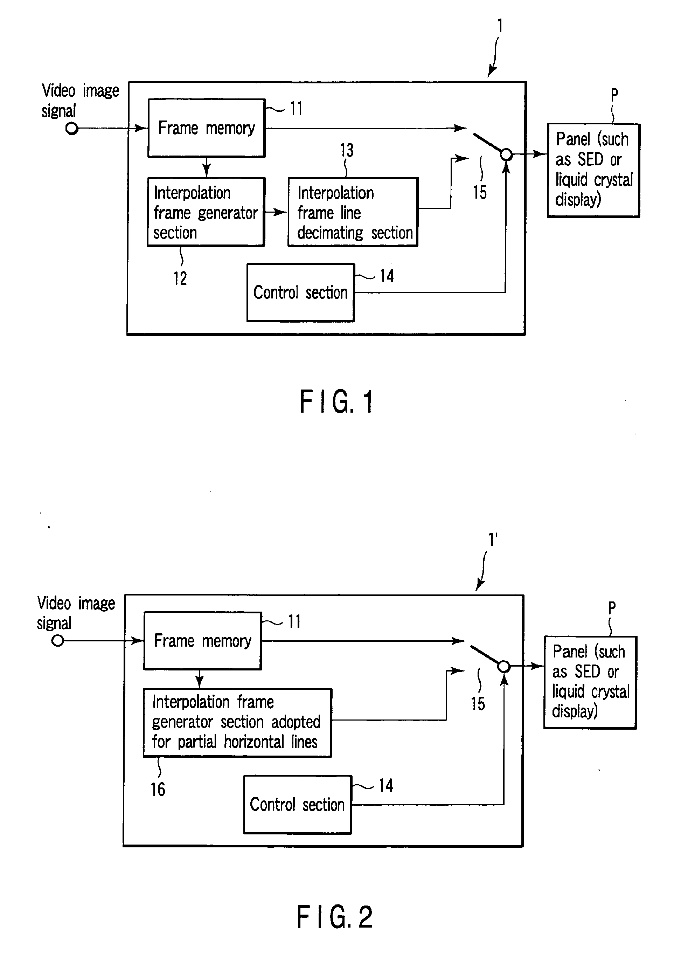

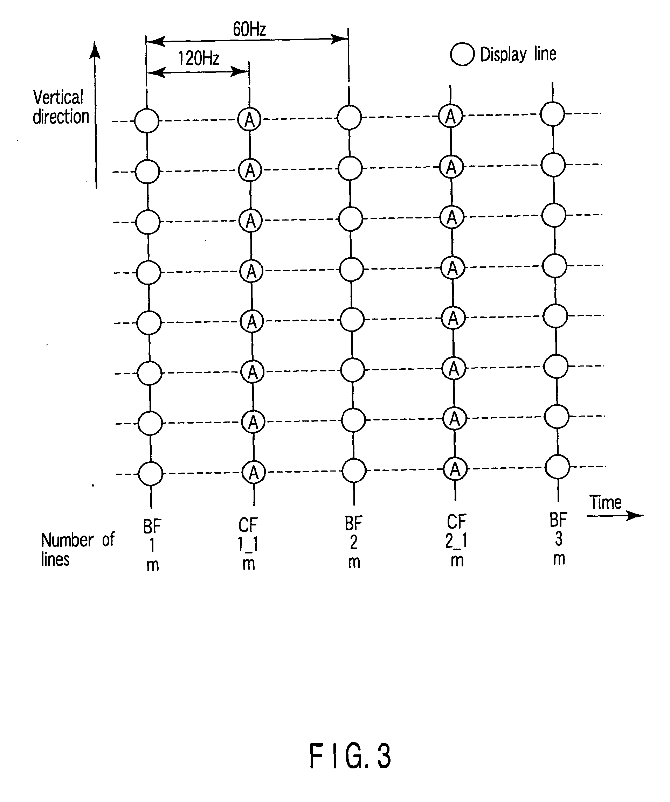

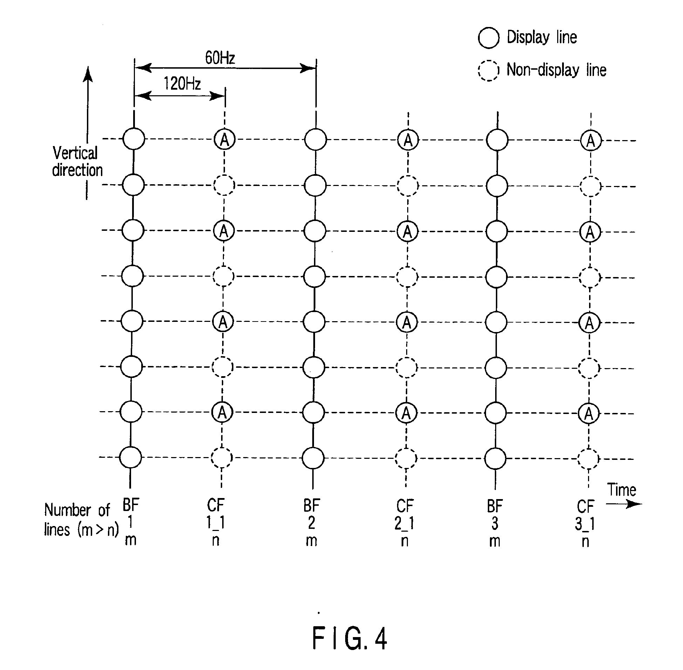

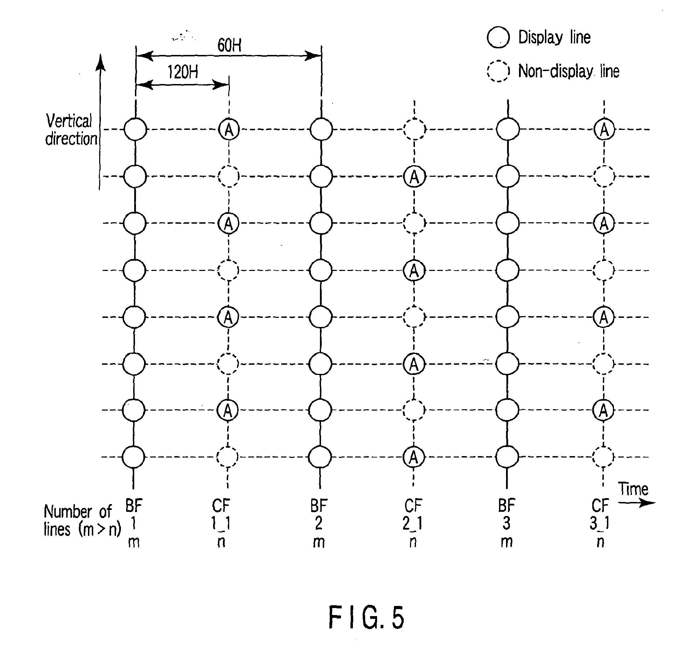

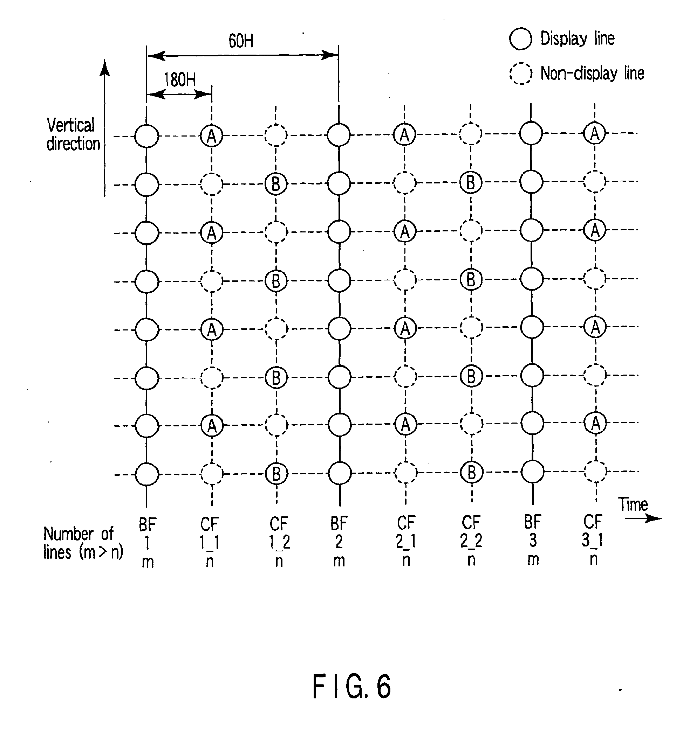

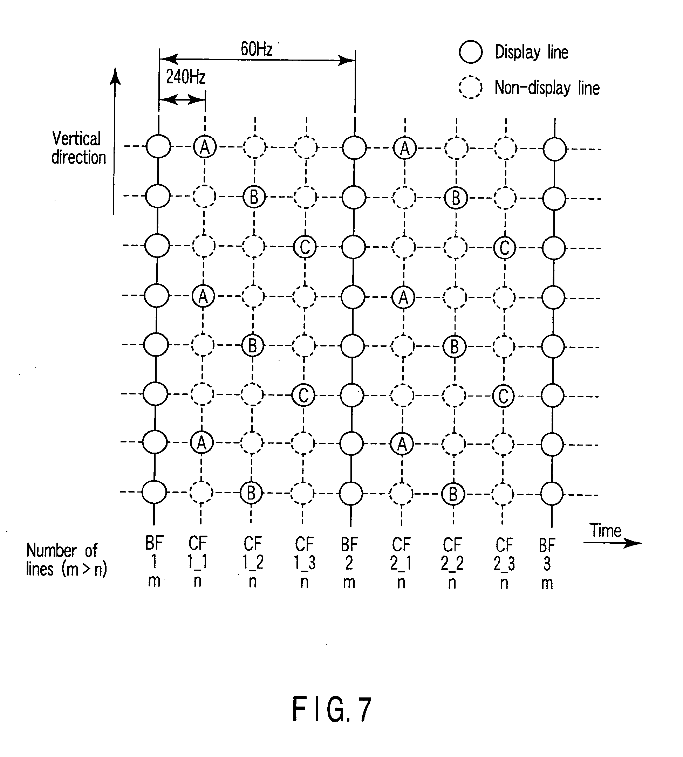

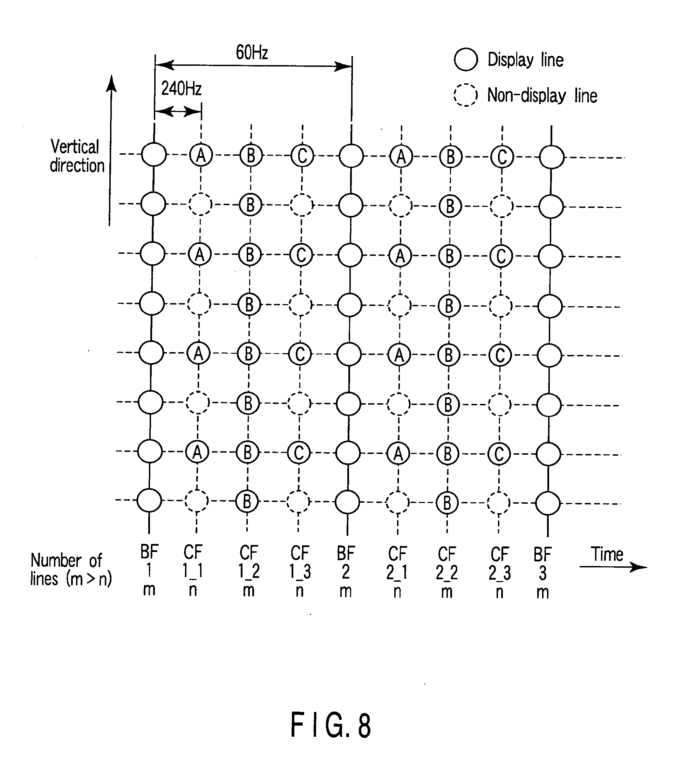

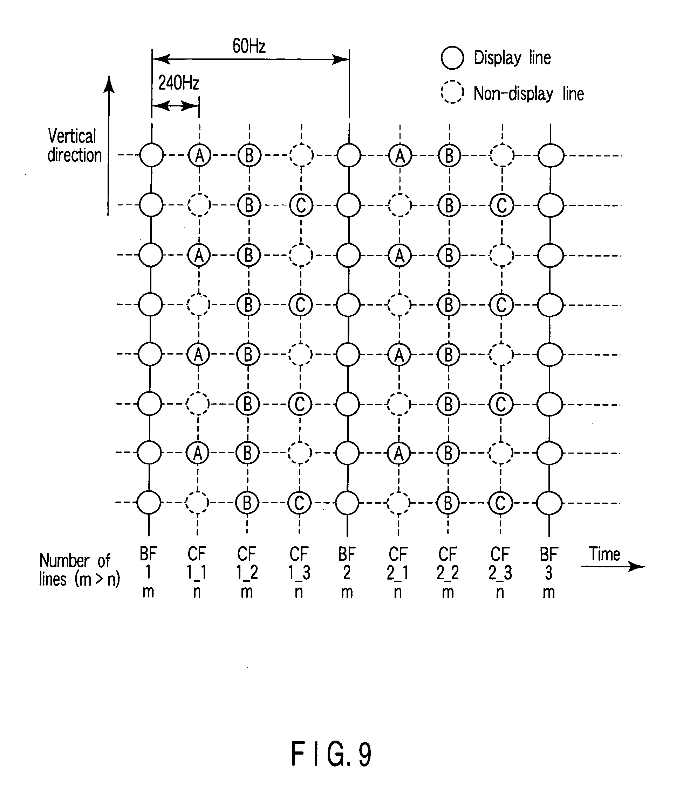

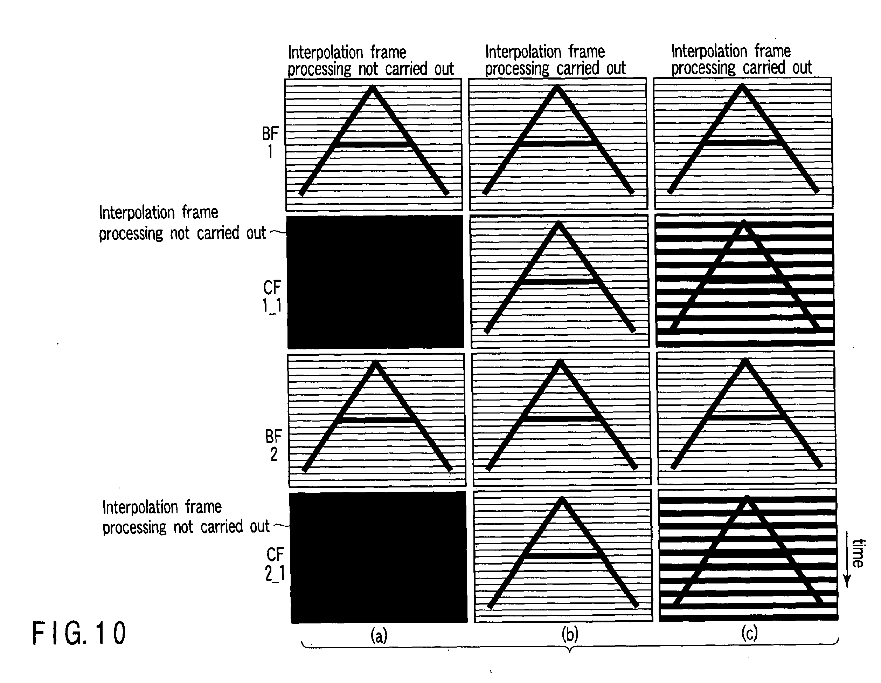

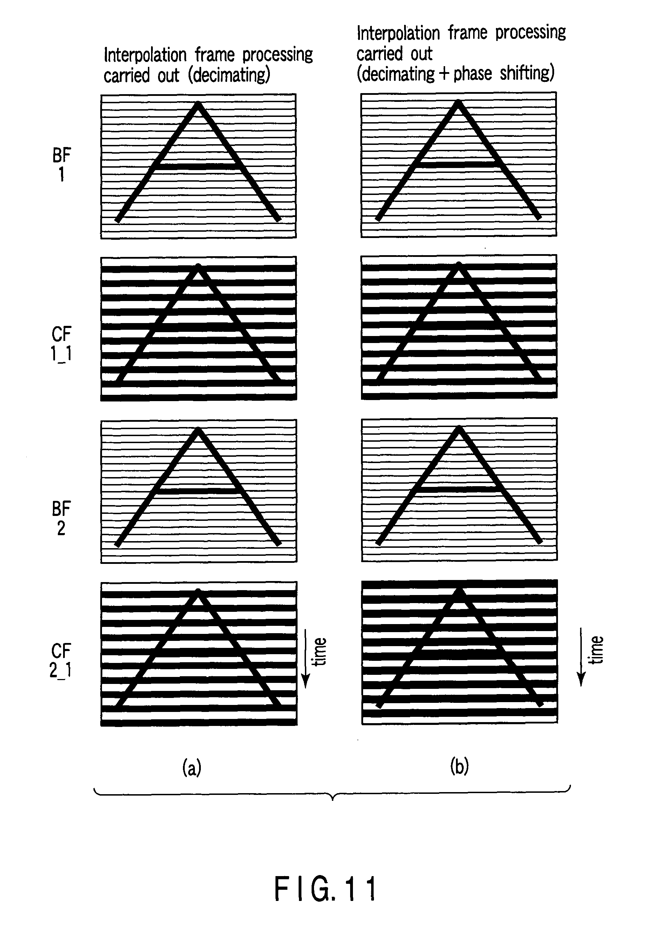

FIG. 1 is a block diagram depicting an example of a configuration of a video image processing apparatus according to an embodiment of the present invention; FIG. 2 is a block diagram depicting another example of a configuration of a video image processing apparatus according to an embodiment of the present invention; FIG. 3 is an illustrative view showing an example of a video image signal with an interpolation signal before carrying out a decimating process of a video image processing apparatus according to an embodiment of the present invention; FIG. 4 is an illustrative view showing an example of a decimating process of an interpolation signal of a video image processing apparatus according to an embodiment of the present invention (a basic example); FIG. 5 is an illustrative view showing an example of a decimating process of the same (an example of alternately changing decimating positions); FIG. 6 is an illustrative view showing an example of a decimating process of the same (an example of two-stage interpolation); FIG. 7 is an illustrative view showing an example of a decimating process of the same (an example of three-stage interpolation); FIG. 8 is an illustrative view showing an example of a decimating process of the same (an example of three-stage interpolation in which no decimation is carried out at a second stage); FIG. 9 is an illustrative view showing an example of a decimating process of the same (an example of three-stage interpolation in which no decimation is carried out at a second stage and decimating positions are alternately changed); and FIG. 10 is an illustrative view showing an example of a video image produced by the same decimating process; and FIG. 11 is an illustrative view showing an example of a video image produced by the same decimating process.

### <Video image display apparatus according to an embodiment of the present invention>

### (Structure)

First, an example of a configuration of a video image display apparatus according to an embodiment of the present invention is shown in FIG. 1. A video image display apparatus 1, for example, has: a frame memory 11 for converting a video image signal such as a brightness signal and a color signal (YCbCr) or an RGB signal into a frame image signal of each frame for a 1920 × 1080 pixel HD (High Definition) and storing the converted signal; an interpolation frame generator section 12 for, based on the frame image signal supplied from the frame memory 11, generating an interpolation frame image signal of the supplied signal; and an interpolation frame line decimating processing section 13 for properly carrying out a decimating process for each horizontal line from this interpolation frame image signal. Further, the video image display apparatus 1 has: a switch section 15 for receiving a frame video image signal from the frame memory 11 and receiving interpolation frame video image signals which include partial interpolation frame video image signals which have been properly decimated, from the interpolation frame line decimating processing section 13; control section 14 for controlling an operation of the switch section 15; and a panel section P such as SED or liquid crystal display for receiving a frame video image signal from the switch section 15 via a low voltage differential SCSI (LVDS) cable or the like and displaying a video image on a display screen.

In the video image display apparatus having such constituent elements, a decimating process is properly carried out on a horizontal line by line basis after an interpolation frame video image signal has been generated.

### (Structure)

Similarly, an example of another configuration of the video image display apparatus 1 according to an embodiment of the present invention will be described with reference to FIG. 2.

The video image display apparatus 1, for example, has: a frame memory 11 for converting a video image signal such as a brightness signal and a color signal (YCbCr) or an RGB signal into a frame image signal of each frame for a 1920 × 1080 pixel HD (High Definition) and storing the converted signal; and an interpolation frame generator section 16 adopted for partial horizontal lines, for generating an interpolation frame video image signal of partially interpolated horizontal lines and required interpolation frame video signals without generating unnecessary horizontal lines from the start, based on a frame image signal of the frame memory 11. In this case, no decimating process is carried out.

Further, the video image display apparatus 1 has: a switch section 15 for receiving a frame video image signal from the frame memory 11 and receiving interpolation frame video image signals which include partial interpolation frame video image signals (or all partial interpolation video image signals) from the interpolation frame generator section 16; a control section 14 for controlling an operation of this switch section 15; and a panel section P such as SED or liquid crystal display for receiving a frame video image signal from the switch section 15 via a low voltage differential SCSI (LVDS) cable or the like and displaying a video image on a display screen.

In the video image display apparatus 1 having such constituent elements, it becomes possible to eliminate a wasteful decimating process and to reduce a CPU processing burden of the control section 14 by the interpolation frame generator section 16 adopted for partial horizontal lines generating only necessary horizontal lines without generating from the start horizontal lines which must be decimated after generated. In all of the following embodiments, it is possible to use the interpolation frame generator section 16 adopted for partial horizontal lines. In this case, even if a decimating process is described in the following embodiments, it becomes possible to display a video image in the range of a transfer speed without carrying out a wasteful decimating process by processing of the interpolation frame generator section 16 adopted for partial horizontal lines.

### (Decimating interpolation frame processing)

### - Interpolation frame image not subjected to decimating process

First, as a reference, a process in the case where no decimating process is carried out will be described with reference to FIGS. 3 and 10A. FIG. 3 shows an example of a video image signal together with an interpolation signal before carrying out a decimating process of a video image processing apparatus according to an embodiment of the present invention, and also shows frame image signals BF1, BF2, and BF3 ... having "m" horizontal lines supplied from the frame memory 11. This figure also shows interpolation frame image signals CF1_1, CF2_1, ... having "m" horizontal lines supplied from an interpolation frame generator section 12 among these frame image signals BF1, BF2, and BF3. A comparison with a case of FIG. 10A in which no interpolation frame can be provided can be understood by referring to FIG. 10C in which an interpolation frame has been provided.

In FIG. 3, there is shown a time series based progress of these frame video image signals. As an example, although 60 Hz is defined between the frame image signals BF1 and BF2, and 120 Hz is defined between the frame image signal BF1 or the like and the interpolation frame image signal CF1_1 or the like, another value may be set.

Here, the interpolation frame image signals CF_1, CF2_1, ... have the same horizontal lines as the essential frame image signals BF1, BF2, BF3, ..., and these interpolation frame image signals are added at the subsequent stage, and a transfer quantity of the LVDS cable or the like at the subsequent stage is doubled, whereby a failure such as lowering of a transfer rate may occur.

### - Decimating interpolation frame image (FIG. 4)

Now, a processing operation of interpolation frames when a decimating process has been carried out with respect to specific horizontal lines will be described with reference to FIG. 4. FIG. 4 is an illustrative view showing an example of a process for decimating an interpolation signal of a video image processing apparatus according to an embodiment of the present invention (a basic example). This figure also shows frame image signals BF1, BF2, BF3, ... having "m" horizontal lines supplied from the frame memory 11. Further, this figure shows interpolation frame image signals CF1_1, CF2_1, ... having "n" (m > n) horizontal lines supplied from the interpolation frame line decimating section 13, the horizontal lines being decimated among these frame image signals BF1, BF2, and BF3. Here, the horizontal lines to be decimated are set at the same position in the respective interpolation frame video image signals. A comparison with a case of FIG. 10B of an interpolation frame in which no decimation is carried out can be understood by referring to FIG. 10C in which a decimated interpolation frame has been provided.

In FIG. 4, there is shown a time series based progress of these frame video image signals. As an example, although 60 Hz is defined between the frame image signals BF1 and BF2, and 120 Hz is defined between the frame image signal BF1 or the like and the interpolation frame image signal CF1_1 or the like, another value may be set.

Here, the interpolation frame image signals CF1, CF2, ... subjected to a decimating process (or those not subjected to a partial horizontal line interpolating process from the start) have horizontal lines which are 1/2, for example, of the essential frame image signals BF1, BF2, BF3, .... For example, in the above-described frame for a 1920 × 1080 pixel HD, 540 lines are provided, which is half of 1080 lines. In this manner, the number of lines to be transferred is obtained as 1080 + 540 = 1620. By reducing a transfer quantity of an LVDS cable or the like at a subsequent stage from × 2 to about × 1.5, a transfer enable range of the cable can be defined, and a high density screen can be practically used in current specification.

### - Interpolation frame image produced by differentiating decimating horizontal line positions (FIG. 5)

Now, a processing operation of interpolation frames produced by differentiating decimating horizontal line positions will be described with reference to FIG. 5. FIG. 5 is an illustrative view showing an example of a decimating process when decimating horizontal line positions are alternately differentiated from each other. This figure also shows frame image signals BF1, BF2, BF3, ... having "m" horizontal lines supplied from the frame memory 11. Further, this figure shows interpolation frame image signals CF1_1, CF2_1, ... having n (m > n) horizontal lines supplied from the interpolation frame line decimating section 13 in which a decimating process has been carried out (or a partial horizontal line interpolating process is not carried out from the start) among these frame image signals BF1, BF2, and BF3.

Here, decimating line positions are alternately differentiated from each other (are shifted in phase), whereby, as shown in FIG. 11B, decimating positions do not become monotonous in the case of comparison with FIG. 11A. Thus, for example, a failure such as streak generation on a screen can be avoided.

In FIG. 5, there is shown a time series based progress of these frames. As an example, although 60 Hz is defined between the frame image signals BF1 and BF2, and 120 Hz is defined between the frame image signal BF1 or the like and the interpolation frame image signal CF1_1 or the like, another value may be set.

Here, the interpolation frame image signals CF1_1, CF2_1, ... subjected to a decimating process (or those not subjected to a partial horizontal line interpolating process from the start) have horizontal lines of 1/2, for example, of the essential frame image signals BF1, BF2, BF3, .... For example, in the above-described frame for a 1920 × 1080 pixel HD, 540 lines are provided, which is half of 1080 lines. In this manner, the number of lines to be transferred is obtained as 1080 + 540 = 1620. By reducing a transfer quantity of an LVDS cable or the like at a subsequent stage from × 2 to about × 1.5, a transfer enable range of the cable can be defined, and a high density screen can be practically used in current specification.

### - Two-stage decimating interpolation frame images (FIG. 6)

Now, a processing operation of two-stage decimating interpolation frame images will be described with reference to FIG. 6. In FIG. 6, there are shown frame image signals BF1, BF2, BF3, ... having "m" horizontal lines supplied from the frame memory 11. Further, there are shown two-stage interpolation frame image signals CF1_1, CF1_2, CF2_1, CF2_2, CF3_1, ... having "n" horizontal lines supplied from the interpolation frame line decimating section 13 (or interpolation frame generator section 16 adopted for partial horizontal lines) in which a decimating process has been carried out (or a partial horizontal line interpolating process is not carried out from the start) among these frame image signals BF1, BF2, and BF3.

In FIG. 6, there is shown a time series based progress of these frame image signals. As an example, although 60 Hz is defined between the frame image signals BF1 and BF2, 180 Hz is defined between the frame image signal BF1 or the like and the interpolation frame image signal CF1_1 or the like, 180 Hz is defined between the interpolation frame image signal CF1_1 or the like and the interpolation frame image signal CF1_2 or the like, and 180 Hz is defined between the interpolation frame image signal CF1_2 or the like and the interpolation frame image signal BF2 or the like, another value may be set.

Here, the interpolation frame signals CF1_1, CF1_2, CF2_1, CF2_2, ... subjected to a decimating process (or those not subjected to a partial horizontal line interpolating process from the start) have horizontal lines which are identical to those of the essential frame image signals BF1, BF2, BF3, ..... For example, in the above-described frame for a 1920 × 1080 pixel HD, 1080 lines are obtained. In this manner, the number of lines to be transferred becomes 1080 × 2 = 2160, and a transfer quantity of an LVDS cable or the like at a subsequent stage is doubled. However, in the case of using an interpolation frame in which no two-stage decimating is carried out, the transfer quantity is tripled. Therefore, a smooth mobile image screen display is achieved so as to be close to a case of using two-stage interpolation frames while the transfer quantity is restricted to × 2.

### - Three-stage decimating interpolation frame images (FIG. 7)

Now, a processing operation of three-stage decimating interpolation frame images will be described with reference to FIG. 7. In FIG. 7, there are shown frame image signals BF1, BF2, BF3, ... having "m" horizontal lines supplied from the frame memory 11. Further, there are shown three-stage interpolation frame image signals CF1_1, CF1_2, CF1_3, CF2_1, CF2_2, CF2_3, ... having "n" horizontal lines supplied from the interpolation frame line decimating section 13 (or interpolation frame generator section 16 adopted for partial horizontal lines) in which a decimating process has been carried out (or a partial horizontal line interpolating process is not carried out from the start) among these frame image signals BF1, BF2, and BF3.

In FIG. 7, there is shown a time series based progress of these frame image signals. As an example, although 60 Hz is defined between the frame image signals BF1 and BF2, 240 Hz is defined between the frame image signal BF1 or the like and the interpolation frame image signal CF1_1 or the like, 240 Hz is defined between the interpolation frame image signal CF1_1 or the like and the interpolation frame image signal CF1_2 or the like, and 240 Hz is defined between the interpolation frame image signal CF1_2 or the like and the interpolation frame image signal CF1_3 or the like, another value may be set.

Here, the interpolation frame image signals CF1_1, CF1_2, CF1_3, CF2_1, CF2_2, ... subjected to a decimating process (or those not subjected to a partial horizontal line interpolating process from the start) have horizontal lines identical to those of the essential frame image signals BF1, BF2, BF3, .... For example, in the above-described frame for the 1920 × 1080 pixel HD, 1080 lines are obtained. In this manner, the number of lines to be transferred becomes 1080 × 2 = 2160, and a transfer quantity of an LVDS cable or the like at the subsequent stage is doubled. In the case of using interpolation frames not subjected to three-stage decimating, the transfer quantity is quadrupled. Therefore, it is possible to say that a sooth mobile screen display close to a case of using three-stage interpolation frames is achieved while the transfer quantity is restricted to × 2.

### - Interpolation frame image produced when an interpolation frame at a second stage is not decimated in a three-stage interpolating process (FIG. 8)

An interpolation frame image produced when an interpolation frame at a second stage is not decimated in a three-stage interpolating process will be described with reference to FIG. 8. In FIG. 8, there are shown frame image signals BF1, BF2, BF3, ... having "m" horizontal lines supplied from the frame memory 11. Further, there are shown three-stage interpolation frame image signals CF1_1, CF1_2. CF1_3, CF2_1, CF2_2, CF2_3, ... having "n" horizontal lines supplied from the interpolation frame line decimating section 13 (or interpolation frame generator section 16 adopted for partial horizontal lines) subjected to a decimating process (or those not subjected to a partial horizontal line interpolating process from the start) among these frame image signals BF1, BF2, and BF3.

In FIG. 8, there is shown a time series based progress of these frame video image signals. As an example, although 60 Hz is defined between the frame image signals BF1 and BF2, 240 Hz is defined between the frame image signal BF1 or the like and the interpolation frame image signal CF1_1 or the like, 240 Hz is defined between the interpolation frame image signal CF1_1 or the like and the interpolation frame image signal CF1_2 or the like, and 240 Hz is defined between the interpolation frame image signal CF1_2 or the like and the interpolation frame image signal CF1_3 or the like, another value may be set.

Here, the interpolation frame image signals CF1_1, CF1_2, CF1_3, CF2_1, CF2_2, ... subjected to a decimating process (or those not subjected to a partial horizontal line interpolating process from the start) have horizontal lines identical to those of the essential frame image signals BF1, BF2, BF3, .... For example, in the above-described frame for the 1920 × 1080 pixel HD, 1080 lines are obtained. In this manner, the number of lines to be transferred becomes 1080 × 3 = 3240, and a transfer quantity of an LVDS cable or the like at the subsequent stage is tripled. In the case of using interpolation frames not subjected to three-stage decimating, the transfer quantity is quadrupled. Therefore, it is possible to say that a sooth mobile screen display close to a case of using three-stage interpolation frames is achieved while the transfer quantity is restricted to × 3.

### - Interpolation frame image produced when interpolation frames at first and third stages are decimated in a three-stage interpolating process while frame positions are differentiated from each other (FIG. 9)

An interpolation frame image produced when interpolation frames at first and third stages are decimated in a three-stage interpolating process while frame positions are differentiated from each other will be described with reference to FIG. 9. In FIG. 9, there are shown frame image signals BF1, BF2, BF3, ... having "m" horizontal lines supplied from the frame memory 11. Further, there are shown three-stage interpolation frame image signals CF1_1, CF1_2, CF1_3, CF2_1, CF2_2, CF2_3, ... having "n" horizontal lines supplied from the interpolation frame line decimating section 13 (or interpolation frame generator section 16 adopted for partial horizontal lines) subjected to a decimating process (or those not subjected to a partial horizontal line interpolating process from the start) among these frame image signals BF1, BF2, and BF3.

Here, decimating line positions of interpolation frames at the first and third stages are shown so as to be differentiated from each other (so as to be shifted in phase). In this manner, as in the case shown in FIG. 11B, the decimating positions do not become monotonous, and thus, for example, a failure such as stream generation in a screen can be avoided.

In FIG. 9 also, there is shown a time series based progress of these frame video image signals. As an example, although 60 Hz is defined between the frame image signals BF1 and BF2, 240 Hz is defined between the frame image signal BF1 or the like and the interpolation frame image signal CF1_1 or the like, 240 Hz is defined between the interpolation frame image signal CF1_1 or the like and the interpolation frame image signal CF1_2 or the like, and 240 Hz is defined between the interpolation frame image signal CF1_2 or the like and the interpolation frame image signal CF1_3 or the like, another value may be set.

Here, the interpolation frame image signals CF1_1, CF1_2, CF1_3, CF2_1, CF2_2, ... subjected to a decimating process (or those not subjected to a partial horizontal line interpolating process from the start) have horizontal lines identical to those of the essential frame image signals BF1, BF2, BF3, .... For example, in the above-described frame for the 1920 × 1080 pixel HD, 1080 lines are obtained. In this manner, the number of lines to be transferred becomes 1080 × 3 = 3240, and a transfer quantity of an LVDS cable or the like at the subsequent stage is tripled. In the case of using interpolation frames not subjected to three-stage decimating, the transfer quantity is quadrupled. Therefore, it is possible to say that a sooth mobile screen display close to a case of using three-stage interpolation frames is achieved while the transfer quantity is restricted to × 3. At the same time, the decimating positions do not become monotonous, and thus, a failure such as stream generation in a screen can be avoided.

### <Example of television using a video image display apparatus according to an embodiment of the present invention>

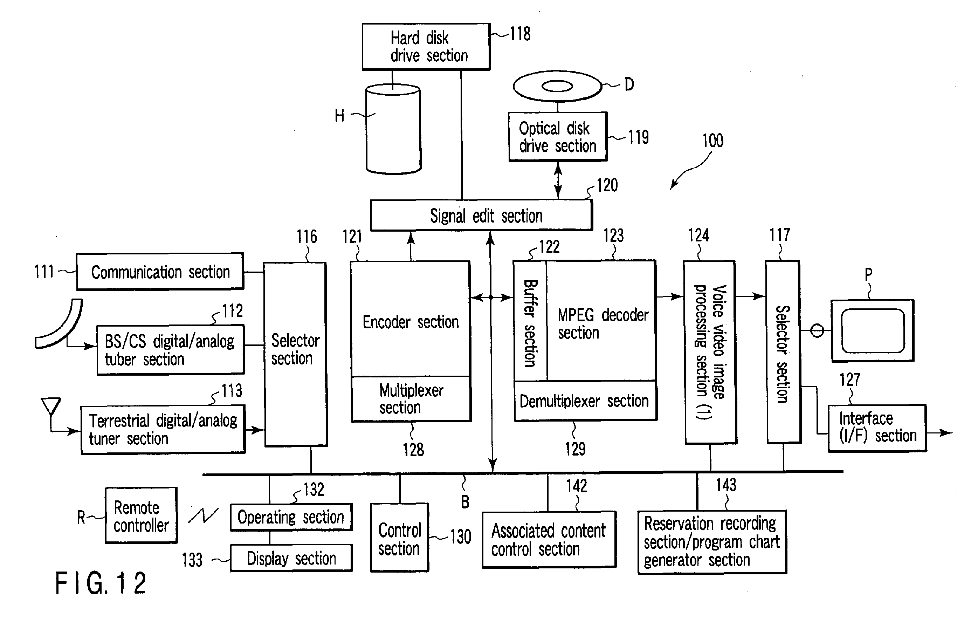

Now, an example of a configuration of a digital television using a video image display apparatus according to an embodiment of the present invention is shown below. FIG. 12 is a block diagram depicting an example of a configuration of a broadcast recording apparatus to which a video image processing apparatus according to an embodiment of the present invention has been applied. A broadcast recording apparatus 100 of FIG. 12 is provided as an example of a digital television having a recording function while a tuner or the like is used as a source.

In FIG. 12, the broadcast recording apparatus 100 which is a digital television has two types of disk drives. Namely, this apparatus has: a hard disk drive section 118 for driving a hard disk H as a first medium; and an optical disk drive section 119 for rotationally driving an optical disk D which is an information recording medium capable of constructing a video file as a second medium and executing information reading and writing operations. In addition, a control section 130 is connected to each section via a data bus B in order to control entire operations. However, in the case of carrying out the present invention, the optical disk drive section 119 is not always provided as a required constituent element.

In addition, the broadcast recording apparatus 100 of FIG. 12 primarily includes an encoder section 121 which configures a recording side; an MPEG decoder section 123 which configures a reproducing side; and the control section 130 for controlling an operation of apparatus main body. The broadcast recording apparatus 100 has an input side selector 116 and an output side selector 117. A communication section 111 such as LAN, a so called satellite broadcast (BS/CS) digital/analog tuner section 112, and a so called terrestrial digital/analog tuner section 113 are connected to the input side selector 116, and a signal is outputted to the encoder section 121. In addition, a satellite antenna is connected to the BS/CS digital/analog tuner section 112, and a terrestrial antenna is connected to the terrestrial digital/analog tuner section 113. In addition, the broadcast recording apparatus 100 has: the encoder section 121; a signal edit section 120 for carrying out desired data processing such as data edit upon the receipt of an output from the encoder section 121; the hard disk drive section 118 connected to the signal edit section 120; and the optical disk drive 119.

Further, the broadcast recording apparatus 100 has: the hard disk drive section 118; the MPEG decoder section 123 for receiving and decoding a signal from the optical disk drive section 119; the encoder section 121; a buffer section 122; the MPEG decoder section 123; a multiplexer section 128; a demultiplexer section 129; the control section 130; an associated content control section 142; a reservation recording section/program chart generator section 143. Each of these sections is connected to the control section 130 via a data bus B. Further, an output from the selector section 117 is supplied to a display P or is supplied to an external device via an interface section 127 making communication with the external device.

Further, the broadcast recording apparatus 100 has an operating section 132 connected to the control section 130 via the data bus B, the operating section receiving an operation of a user or an operation of a remote controller R. Here, the remote controller R enables an operation which is substantially identical to that of the operating section 132 provided at the main body of the broadcast recording apparatus 100. This remote controller enables a variety of settings such as an instruction for recording and reproduction of the hard disk drive section 118 or optical disk drive section 119, an edit instruction, or settings of tuner operation or reservation recording.

In the thus configured broadcast recording apparatus 100, the above-described video image processing apparatus 1 according to an embodiment of the present invention is provided at a final stage of a voice video image processing section. In this manner, even if a transfer process of a cable or the like is not sufficient, it becomes possible to display an image smoothly with high precision by carrying out an interpolation frame processing operation properly subjected to a decimating process (or the same not subjected to a partial horizontal line interpolating process from the start).

### - Configuration of another broadcast recording system

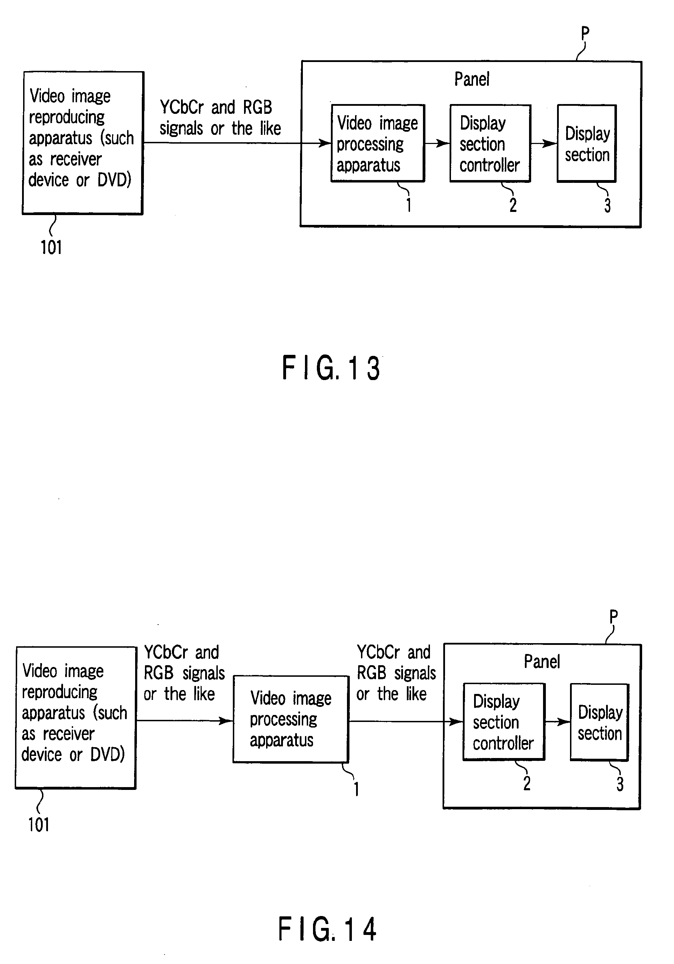

In addition to the constituent elements of the above-described broadcast recording apparatus, a broadcast recording system having constituent elements as shown below is further preferable. FIGS. 13 and 14 are block diagrams depicting a configuration of a broadcast recording system to which a video image processing apparatus according to an embodiment of the present invention has been applied.

The broadcast recording system shown in FIG. 13 shows a case in which the video image processing apparatus 1 according to an embodiment of the present invention is included in a panel device P. Here, the panel device P having received an output from a video image recording and reproducing apparatus 101 is processed by the video image processing apparatus 1 and a display controller 2, and then, the processed output is displayed on a display section 3.

The broadcast recording system shown in FIG. 14 shows a case in which the video image processing apparatus 1 according to an embodiment of the present invention is interposed between the video image recording and reproducing apparatus 101 and the panel device P. Here, an output from the video image recording and reproducing apparatus 101 is connected to the video image processing apparatus 1, and an output from the video image processing apparatus 1 is processed by the display controller 2 in the panel device P, and then, the processed output is displayed on the display section 3.

One skilled in the art can achieve the present invention with a variety of the embodiments described above. Further, a variety of modifications of these embodiments can be readily conceived by one skilled in the art, making it possible to apply the invention to a variety of embodiments even if one does not have inventive ability. Therefore, the present invention covers a broad range without deviating from the disclosed principle and novel features. The present invention is not limited to the above-described embodiments.

For example, in the above-described embodiments, although a frame of a 1920 × 1080 pixel HD (High Definition) is shown as an example of a frame image, plenty of frame image standards such as a 1920 × 4320 pixel super high vision standard are known. These standards are also applicable similarly.

## Claims

1. A video image processing apparatus, **characterized by** comprising:
a frame generator section (11) which continuously generates at a predetermined frequency (cf. 60 Hz) a plurality of frame images (BF1, BF2, ...) on which one screen is represented by a plurality of horizontal lines based on a given video image signal;
an interpolation frame generator section (11) which carries out an interpolation process with respect to a part of the plurality of horizontal lines of the adjacent two frame images from among the plurality of frame images generated by the frame generator section, thereby generating partial interpolation frame images (CF1_1, CF2_1, ...) which interpolate the adjacent two frame images; and
a control section (14) which receives the plurality of frame images from the frame generator section and the partial interpolation frame images from the interpolation frame generator section, and then, controls such partial interpolation frame images to be inserted respectively sequentially in time series into the adjacent frame images and to be outputted.

2. The video image processing apparatus according to claim 1, **characterized in that** the interpolation frame generator section generates the plurality of interpolation frame images, and then, decimates horizontal lines of partial interpolation frame images from the plurality of interpolation frame images (FIG. 1).

3. The video image processing apparatus according to claim 1, **characterized in that** the interpolation frame generator section enables an interpolating process of one frame image and the adjacent frame images from among the plurality of frame images generated by the frame generator section with respect to partial horizontal lines included in the plurality of horizontal lines, and disables an interpolating process with respect to a horizontal line other than the partial horizontal lines.

4. The video image processing apparatus according to claim 1, **characterized in that** the plurality of interpolation frame images (CF1_1. CF2_1, ...) are generated when horizontal lines alternately different from each other sequentially in time series are interpolated (FIG. 5).

5. The video image processing apparatus according to claim 1, **characterized in that** the interpolation frame generator section generates a plurality of interpolation frame images between the frame images adjacent to each other (FIG. 6).

6. The video image processing apparatus according to claim 1, **characterized in that** the interpolation frame generator section generates three interpolation frame images between the frame images adjacent to each other (FIG. 7).

7. The video image processing apparatus according to claim 1, **characterized in that** the interpolation frame generator section generates first, second, and third interpolation frame images between the frame images adjacent to each other, and disables an interpolating process of identical horizontal lines with respect to the first interpolation frame image and the third interpolation frame image sequentially in time series (FIG. 8).

8. The video image processing apparatus according to claim 1, **characterized in that**, when the interpolation frame generator section generates first, second, and third interpolation frame images between the frame images adjacent to each other, this generator section disables an interpolating process of horizontal lines of the first interpolation frame image sequentially in time series, enables an interpolating process of horizontal lines of the second interpolation frame image, and disables an interpolating process of horizontal lines different from the horizontal lines of the first interpolating frame image with respect to the third interpolation frame image (FIG. 9).

9. A video image display apparatus, **characterized by** comprising:
a frame generator section (11) which continuously generates at a predetermined frequency (cf. 60 Hz) a plurality of frame images (BF1, BF2, ...) on which one screen is represented by a plurality of horizontal lines based on a given video image signal;
an interpolation frame generator section (11) which carries out an interpolation process with respect to a part of the plurality of horizontal lines of the adjacent two frame images from among the plurality of frame images generated by the frame generator section, thereby generating partial interpolation frame images (CF1_1, CF2_1, ...) which interpolate the adjacent two frame images;
a control section (14) which receives the plurality of frame images from the frame generator section and the partial interpolation frame images from the interpolation frame generator section, and then, controls such partial interpolation frame images to be inserted respectively sequentially in time series into the adjacent frame images and to be outputted; and
a display section (P) which displays a video image on a display screen based on the plurality of frame images outputted under the control of the control section and the partial interpolation frame images.

10. The video image display apparatus according to claim 9, **characterized in that** the interpolation frame generator section generates the plurality of interpolation frame images, and then, decimates horizontal lines of partial interpolation frame images from the plurality of interpolation frame images (FIG. 1).

11. The video image display apparatus according to claim 9, **characterized in that** the interpolation frame generator section enables an interpolating process of one frame image and the adjacent frame images from among the plurality of frame images generated by the frame generator section with respect to partial horizontal lines included in the plurality of horizontal lines, and disables an interpolating process with respect to a horizontal line other than the partial horizontal lines.

12. The video image display apparatus according to claim 9, **characterized in that** the plurality of interpolation frame images (CF1_1, CF2_1, ...) are generated when horizontal lines alternately different from each other sequentially in time series are interpolated (FIG. 5).

13. The video image display apparatus according to claim 9, **characterized in that** the interpolation frame generator section generates a plurality of interpolation frame images between the frame images adjacent to each other (FIG. 6).

14. The video image display apparatus according to claim 9, **characterized in that** the interpolation frame generator section generates three interpolation frame images between the frame images adjacent to each other (FIG. 7).

15. A video image processing method, **characterized by** comprising:
continuously generating at a predetermined frequency (cf. 60 Hz) a plurality of frame images (BF1, BF2, ...) on which one screen is represented by a plurality of horizontal lines based on a given video image signal;
carrying out an interpolation process with respect to a part of the plurality of horizontal lines of the adjacent two frame images from among the plurality of frame images generated by the frame generator section, thereby generating partial interpolation frame images (CF1_1, CF2_1, ...) which interpolate the adjacent two frame images; and
receiving the plurality of frame images and the partial interpolation frame images, and then, controlling such partial interpolation frame images to be inserted respectively sequentially in time series into the adjacent frame images and to be outputted.

16. The video image processing method according to claim 15, **characterized by** further comprising:
generating the plurality of interpolation frame images, and then, decimating horizontal lines of partial interpolation frame images from the plurality of interpolation frame images (FIG. 1).

17. The video image processing method according to claim 15, **characterized by** further comprising:
enabling an interpolating process of one frame image and the adjacent frame images from among the plurality of generated frame images with respect to partial horizontal lines included in the plurality of horizontal lines, and
disabling an interpolating process with respect to a horizontal line other than the partial horizontal lines (FIG. 2).

18. The video image processing method according to claim 15, **characterized by** further comprising:
generating the plurality of interpolation frame images (CF1_1, CF2_1, ...) when horizontal lines alternately different from each other sequentially in time series are interpolated (FIG. 5).

19. The video image processing method according to claim 15, **characterized by** further comprising:
generating a plurality of interpolation frame images between the frame images adjacent to each other with respect to the plurality of interpolating frame images (CF1_1, CF2_1, ...) (FIG. 6).

20. The video image processing method according to claim 15, **characterized by** further comprising:
generating three interpolation frame images between the frame images adjacent to each other with respect to the plurality of interpolation frame images (CF1_1, CF2_1, ...) (FIG. 7).
